**Europäisches Patentamt**

**European Patent Office**

**Office européen des brevets**

(19)

(11) Veröffentlichungsnummer : **0 608 281 B1**

(12) # EUROPÄISCHE PATENTSCHRIFT

(45) Veröffentlichungstag der Patentschrift :
**21.06.95 Patentblatt 95/25**

(51) Int. Cl.⁶ : **H04B 1/66,** H03H 17/02

(21) Anmeldenummer : **92920812.2**

(22) Anmeldetag : **06.10.92**

(86) Internationale Anmeldenummer :
**PCT/DE92/00855**

(87) Internationale Veröffentlichungsnummer :
**WO 93/08651 29.04.93 Gazette 93/11**

(54) **VERFAHREN ZUR REDUZIERUNG DES FREQUENZÜBERSPRECHENS BEI DER ÜBERTRAGUNG UND/ ODER SPEICHERUNG AKUSTISCHER ODER OPTISCHER SIGNALE.**

(30) Priorität : **17.10.91 DE 4134420**

(43) Veröffentlichungstag der Anmeldung :
**03.08.94 Patentblatt 94/31**

(45) Bekanntmachung des Hinweises auf die
Patenterteilung :
**21.06.95 Patentblatt 95/25**

(84) Benannte Vertragsstaaten :
**AT BE CH DE DK ES FR GB GR IT LI NL SE**

(56) Entgegenhaltungen :
**EP-A- 0 200 239**
**DE-A- 2 441 889**

(56) Entgegenhaltungen :
**CROCHIERE ET AL. 'MULTIRATE DIGITAL SI-
GNAL PROCESSING' 1983 , PRENTICE-HALL
,ENGLEWOOD CLIFFS (GB)**
**INTERNATIONAL CONFERENCE ON ACOU-
STICS SPEECH AND SIGNAL PROCESSING
Bd. 2, 1984,NEW YORK Seiten 34B21 - 34B24
TOWNES ET AL. 'THE VLSI DESIGN OF A
SUB-BANDCODER'**

(73) Patentinhaber :
**FRAUNHOFER-GESELLSCHAFT ZUR
FÖRDERUNG DER ANGEWANDTEN
FORSCHUNG E.V.**
**Leonrodstrasse 54**
**D-80636 München (DE)**

(72) Erfinder : **EDLER, Bernd**
**Hemelingstrasse 10**
**D-3000 Hanover 21 (DE)**

EP 0 608 281 B1

## Beschreibung

### Technisches Gebiet

Die Erfindung bezieht sich auf ein Verfahren zur Reduzierung des Frequenzübersprechens bei der Übertragung und/oder Speicherung akustischer Signale.

Die Übertragung und/oder Speicherung digitalisierter akustischer Signale wird umso attraktiver, je mehr es gelingt, die zu übertragende Datenmenge zu reduzieren, ohne einen wahrnehmbaren Qualitätsverlust zu erleiden. Zur Reduzierung der Daten von akustischen Signalen sind mehrere Verfahren bekannt, die mit einer Transformation der digitalisierten Daten in den Frequenzbereich bzw. einer Aufteilung in verschiedene Frequenzbänder arbeiten.

### Stand der Technik

Die Aufteilung in verschiedene Teilbänder kann einstufig durch eine Filterbank oder mehrstufig durch Hintereinanderschalten von zwei oder mehreren Filterbänken erfolgen, wobei eine nachgeschaltete Filterbank auch durch eine Transformation ersetzt sein kann. Die so aufbereiteten Daten werden Reduktionsverfahren unterzogen, die die Datenmenge unter Ausnützung der Signalstatistik und der Psychoakustik derart reduziert, daß nach der Übertragung und Rücktransformation der Daten möglichst kein vom menschlichen Ohr wahrnehmbarer Unterschied zum Eingangssignal auftritt. Bei dem Vorschlag zur Standardisierung von Datenreduktionsverfahren für digitale Audiosignale der International Organisation for Standardisation wird zur Aufteilung des Signalspektrums in Teilbänder eine Hybrid-Filterbank eingesetzt. Die Analysebank im Coder besteht aus zwei Stufen. Zunächst wird das Spektrum des Eingangssignals durch eine Polyphasen-Filterbank, wie sie beispielsweise in H. J. Nussbaumer, M. Vetterli, "Computationally Efficient QMF Filter Banks", IEEE Proc. ICASSP 1984, S. 11.3.1-4 beschrieben ist, in 32 Teilbänder zerlegt. Anschließend wird jedes dieser Teilbänder mit einer nachgeschalteten TDAC-Filterbank nochmals in 12 Bänder unterteilt. Eine solche TDAC-Filterbank ist beschrieben in J. P. Princen, A. W. Johnson und A. B. Bradley, "Subband/Transform Coding Using Filter Bank Designs Based on Time Domain Aliasing Cancellation", Proc. ICASSP'87, S. 50.1.1-4.

In der Veröffentlichung von S. A. Townes, T. K. Truong, The VLSI Design of a Sub-band coder, International Conference on Acoustic Speech and Signal Processing, Bd. 2, 1984, New York, 34B21-24B24 werden eine Filterbank in Baumstruktur und eine Filterbank in Parallelstruktur hinsichtlich des Designs von Sub-band Codierern in VLSI-Technologie verglichen.

Eine Vorraussetzung für die Anwendung seriell angeordneter Trennstufen in Datenreduktionsverfahren ist eine gute Bandtrennung, damit jede Spektralkomponente des Eingangssignals möglichst nur ein Teilbandsignal beeinflußt und damit Quantisierungsfehler, die in den Teilbändern entstehen, nur den zugehörigen Frequenzbereich im Ausgangssignal beeinflussen.

Die Teilbandfilter des gesamten Systems müssen deshalb eine möglichst hohe Sperrbereichsdämpfung aufweisen. Die serielle Anordnung von Filter- bzw. Transformationsstufen bedingt jedoch eine ungenügende Sperrbereichsdämpfung, da jeweils mehrere Teilbänder in die Übergangsbereiche vorangehender Trennstufen fallen. Dies führt im Frequenzgang der entsprechenden Teilbandfilter zu einer deutlichen Erhöhung des Signals außerhalb des Durchlaßbereiches.

Die Spektralkomponenten des Eingangssignals in den entsprechenden Frequenzbereichen beeinflussen somit nach Durchlaufen der Trennstufen die Teilbandsignale in Form von Übersprechkomponenten. Entsprechend beeinflussen Quantisierungsfehler in einem dieser Teilbänder nach der Zusammensetzung der Teilbandsignale auch Frequenzbereiche außerhalb der jeweiligen Teilbänder.

Bei bekannten Verfahren wird versucht, der Verschlechterung des Ausgangssignals durch das Frequenzübersprechen dadurch entgegenzuwirken, daß dieser Effekt bei der Codierung berücksichtigt wird. Dies ist jedoch nur in begrenztem Umfang möglich und führt zur Erhöhung der Komplexität der Codierverfahren.

### Darstellung der Erfindung

Der Erfindung liegt die Aufgabe zugrunde, ein Verfahren zur Reduzierung des Frequenzübersprechens bereitzustellen, das besonders effektiv ist und unabhängig von einer nachfolgenden Codierung arbeitet.

Diese Aufgabe wird durch die kennzeichnenden Merkmale des Anspruchs 1 gelöst.

Für ein vorgegebenes System zur Aufteilung der Signale in Frequenzbänder, bei welchem die Aufteilung in hintereinandergeschalteten Stufen erfolgt, kann die Lage und Phasenbeziehung der Signal- bzw. der korrespondierenden Übersprechkomponenten ermittelt werden.

Erfindungsgemäß werden die Signale aus den Teilbändern, in welchen korrespondierende Signal- bzw.

Übersprechkomponenten auftreten, nach der Aufteilung einer gewichteten Summenbildung unterzogen. Die dadurch erhaltenen gewichteten Teilbandsignale werden anschließend codiert und übertragen und/oder gespeichert und decodiert. Um die durch die gewichtete Summenbildung verursachte Veränderung des Signals zu beseitigen, werden die decodierten Teilbandsignale vor der Zusammenführung einer, der gewichteten Summenbildung inversen Operation unterzogen.

Nähere Ausgestaltungen und Weiterbildungen der Erfindung sind in den Unteransprüchen gekennzeichnet.

Der Anspruch 2 kennzeichnet einen zusätzlichen Verfahrensschritt, der Vorteile bietet, wenn eine vorangehende Filterstufe verwendet wird, die das Eingangssignal in eine gerade Anzahl M von Teilbändern aufteilt und zu einer Spiegelung der Spektralanteile in den Teilbändern führt. In diesem Falle werden die Ausgangssignale jedes zweiten Teilbandes dieser Filterstufe einer Korrekturoperation unterzogen, bevor das Signal der nachfolgenden Stufe zugeführt wird.

Nach Anspruch 3 erfolgt die Korrekturoperation durch Multiplikation der Teilbandsignale mit folgender Form {1,-1,1,-1,...}. diese Operation macht die Spiegelung der Teilbandspektren rückgängig.

Besonders vorteilhafte Vorschriften für die gewichtete Summenbildung sowie die dazu inverse Operation sind in den Ansprüchen 4 und 5 angegeben.

Nach Anspruch 6 werden die Gewichtsfaktoren für die Summenbildung bezüglich des Frequenzganges der hintereinandergeschalteten Stufen optimiert. Dabei werden gemäß Anspruch 7 bei einer nachgeschalteten Filterstufe mit einer Aufteilung eines Signals in eine gerade Anzahl von N Teilbändern N/2 Werte von $c_m$ bestimmt.

Die wesentlichen Vorteile der Erfindung bestehen darin, daß der Gesamtfrequenzgang der Übertragung gegenüber bekannter Verfahren deutlich verbessert ist. Durch das erfindungsgemäße Verfahren werden keine zusätzlichen Signalverfälschungen verursacht, d. h., wenn die Teilbandsignale ohne Codierung und Decodierung wieder zusammengeführt werden, wird das Ein/Ausgangsverhalten des Gesamtsystems durch das Verfahren nicht beeinflußt, da durch die inverse Operation die ursprünglichen Teilbandsignale fehlerfrei rekonstruiert werden.

Das erfindungsgemäße Verfahren ist vielfältig einsetzbar. Da die Reduzierung des Frequenzübersprechens unabhängig von eingesetzten Codierungsverfahren ist, eignet es sich sowohl für den Einsatz bei der Übertragung von akustischen, als auch von optischen Signalen.

Bei der Aufteilung des Signalspektrums in Teilbänder können zwei oder mehrere Stufen eingesetzt werden. Die einzelnen Stufen können durch Filterbänke oder durch Transformationscodierung realisiert sein.

Kurze Beschreibung der Abbildungen

Es zeigen:

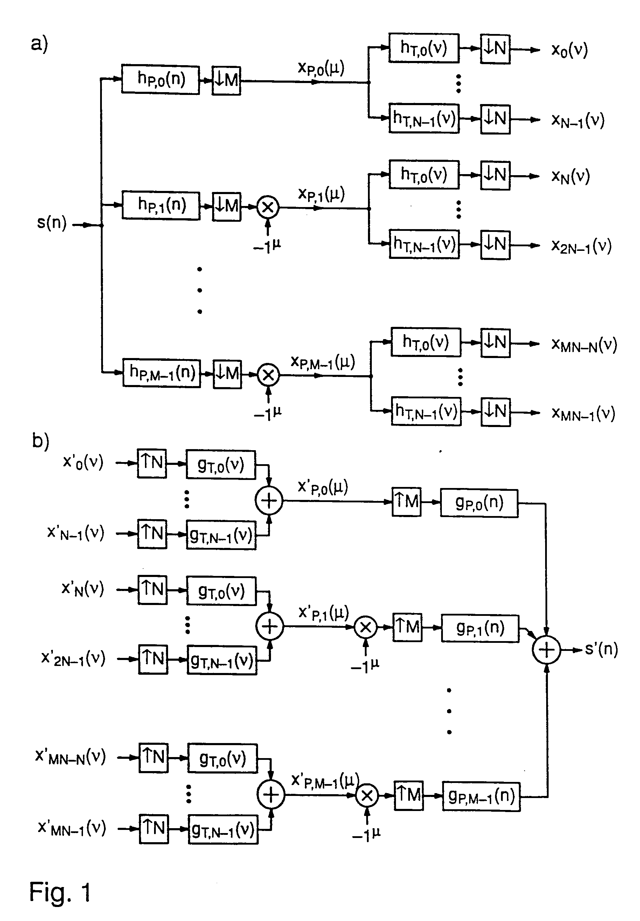

Figur 1.a.: Aufteilung des Spektrums des Eingangssignales in Teilbänder in schematischer Darstellung,
Figur 1.b.: Zusammenführung der Teilbandsignale zu einem Ausgangssignal in schematischer Darstellung,
Figur 2.: Ausschnitt der Frequenzgänge der Teilbandfilter 0 und 1 einer Polyphasen-Filterbank,
Figur 3.: Ausschnitt der Frequenzgänge korrespondierender Teilbandfilter ohne Anwendung des erfindungsgemäßen Verfahrens,
Figur 4.a.: Schematische Darstellung der gewichteten Summenbildung,

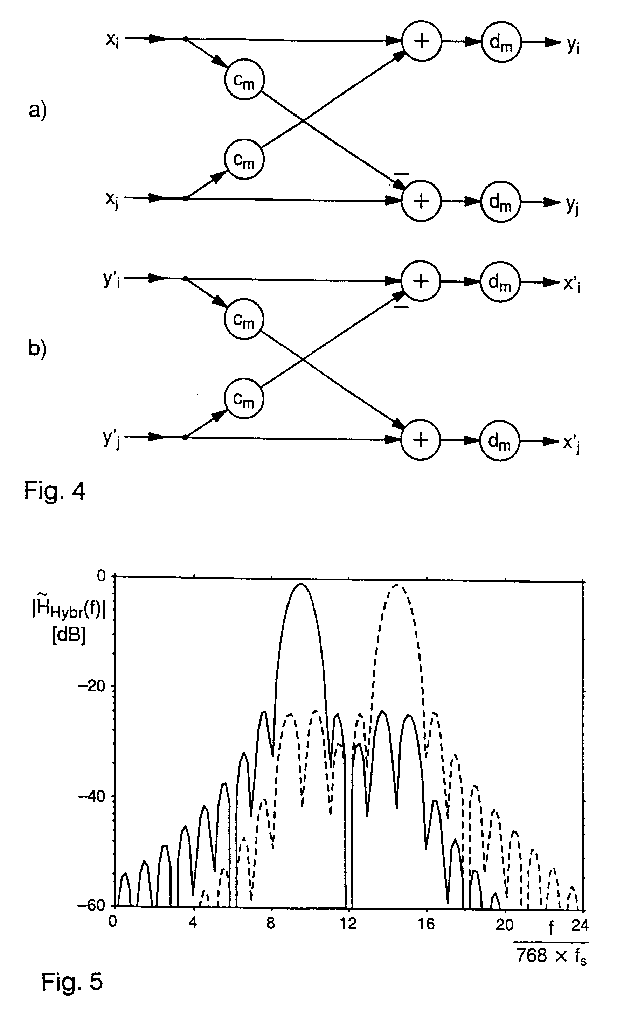

Figur 4.b.: Schematische Darstellung der inversen Operation,
Figur 5.: Ausschnitt der Frequenzgänge korrespondierender Teilbandfilter bei Anwendung des erfindungsgemäßen Verfahrens.

Ausführungsweg

Ohne Beschränkung der Allgemeinheit wird im folgenden zum besseren Verständnis ein zweistufiges Verfahren beschrieben, bei welchem das Spektrum des Eingangssignals mit Hilfe einer Polyphasen-Filterbank in eine gerade Anzahl M von Teilbändern zerlegt und jedes dieser Teilbänder mit einer nachfolgenden TDAC-Filterbank (Time Domain Aliasing Cancellation) nochmals in eine gerade Anzahl N von Bändern unterteilt wird.

Das Verfahren der Aufteilung des Signalspektrums ist in Figur 1.a. dargestellt. Eine Polyphasen-Filterbank zerlegt das Spektrum des Eingangssignals s(n) mit Hilfe von Filtern in M Teilbänder (M: gerade). Die Impulsantworten der Teilbandfilter ergeben sich durch Multiplikation einer Musterimpulsantwort $h_p$ der Länge L mit Cosinusfunktionen, deren Frequenzen den Mittenfrequenzen der Teilbänder entsprechen.

Die Ausgangssignale der Filter werden um den Faktor M unterabgetastet (in der Figur als Pfeil nach unten dargestellt), so daß die Summe der Abtastraten in allen Teilbändern gleich der Abtastrate des Eingangssignals bleibt.

Die Teilbänder mit ungeraden Indizes werden nach Filterung und Unterabtastung mit folgender Form {1,-1,1,-1,...} multipliziert, um die durch die Filter verursachte Spiegelung, die bewirkt, daß in den betreffenden Teilbändern Spektralanteile mit höheren und tieferen Frequenzen vertauscht auftreten, rückgängig zu machen. Für die M Teilbandsignale gilt:

$$x_{P,k}(\mu) = \sum_{n=0}^{L} s(M\mu-n) \cdot h_P(n) \cdot \cos\left(\frac{\pi}{M}(k+\frac{1}{2})(n-\frac{M}{2})\right) \ , \quad \begin{array}{l} 0 \leq k \leq M-1 \\ k \ gerade \end{array}$$

$$x_{P,k}(\mu) = (-1)^{\mu} \sum_{n=0}^{L} s(M\mu-n) \cdot h_P(n) \cdot \cos\left(\frac{\pi}{M}(k+\frac{1}{2})(n-\frac{M}{2})\right) \ , \quad \begin{array}{l} 0 \leq k \leq M-1 \\ k \ ungerade \end{array} \qquad (1)$$

Jedes dieser M Teilbänder wird mit einer nachgeschalteten TDAC-Filterbank nochmals in N Bänder unterteilt (N: gerade).

Die Impulsantworten der TDAC-Filterbank entstehen durch Multiplikation mit einer Musterimpulsantwort $h_T$ (Länge 2 N) mit entsprechenden Cosinusfunktionen. Für die M x N Teilbandsignale gilt:

$$x_{Nk+m}(\nu) = \sum_{\mu=0}^{2N-1} x_{P,k}(N\nu-\mu) \cdot h_T(\mu) \cdot \cos\left(\frac{\pi}{N}(m+\frac{1}{2})(\mu-\frac{N}{2}+\frac{1}{2})\right) , \quad 0 \leq m \leq N-1$$

Die hintereinanderangeordneten Filterstufen zerlegen demnach das Eingangssignal in M x N Teilbänder. Die Figur 1.b. zeigt die Zusammenführung von M x N Teilbandsignalen zu einem Ausgangssignal.

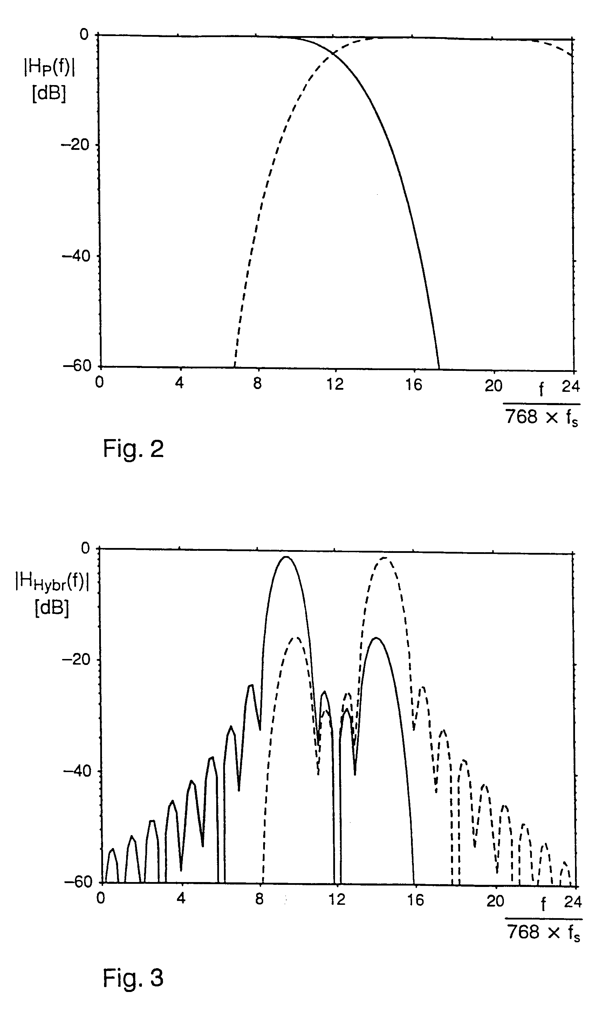

In Figur 2. sind ausschnittsweise die Frequenzgänge zweier benachbarter Teilbandfilter einer Polyphasen-Filterbank mit M = 32 dargestellt. Auf der vertikalen Achse ist die Impulsantwort in Dezibel, auf der horizontalen Achse die Frequenz normiert auf die 384 Teilbänder der Gesamtfilterbank (M = 32, N = 12) aufgetragen. Der Ausschnitt erstreckt sich über den Frequenzbereich der ersten 24 Teilbänder der Gesamffilterbank. Der Frequenzgang des Teilbandfilters 0 ist mit durchgezogener, der des Teilbandfilters 1 mit gestrichelter Linie gezeichnet. Deutlich ist die Überlappung der Frequenzgänge der Teilbandfilter zu erkennen.

Da in diesen Übergangsbereich mehrere Teilbänder der Gesamtfilterbank fallen, ist das Signal im Frequenzgang der entsprechenden Teilbandfilter außerhalb des Druchlaßbereiches, also im Sperrbereich, deutlich erhöht. Durch die Überhöhung der Frequenzgänge im Sperrbereich tritt jede Spektralkomponente, deren Frequenz f in einen Übergangsbereich der Polyphasen-Filterbank fällt, jeweils in zwei Teilbändern der Gesamtfilterbank auf, nämlich als Signalkomponente im Teilband mit Durchlaßbereich bei der Frequenz f und als Übersprechkomponente im Teilband mit Überhöhung bei der Frequenz f. So erscheint eine Spektralkomponente der Frequenz f

$$f = k \cdot \frac{f_s}{2M} + m \cdot \frac{f_s}{2MN} + \Delta f \ , \quad \begin{array}{l} f_s = Abtastfrequenz \\ 1 \leq k \leq M-1, \ -\frac{N}{2} \leq m \leq \frac{N}{2}-1, \ 0 \leq \Delta f \leq \frac{f_s}{2MN} \end{array}$$

im Teilband i = N x k + m als Signalkomponente und im Teilband j = N x k - 1 - m als Übersprechkomponente. Weiterhin liegen Signal- und Übersprechkomponente in den entsprechenden Teilbändern bei der gleichen Frequenz:

$$f_i = f_j = \begin{cases} \Delta f & m \ gerade \\ \dfrac{f_s}{2MN} - \Delta f & m \ ungerade \end{cases}$$

Eine solche Erhöhung im Frequenzgang in Teilbändern der Gesamtfilterbank ist in Figur 3. dargestellt.

Die Figur zeigt Ausschnitte aus den Frequenzgängen von Teilbandfilter 9 (durchgezogene Linie) und Teilbandfilter 14 (gestrichelte Linie) ohne Anwendung des erfindungsgemäßen Verfahrens zur Reduzierung des Frequenzübersprechens. Das Eingangssignal, das zu einer Signalkomponente im Gesamtteilband 9 führt, führt zu einer Übersprechkomponente im Gesamtteilband 14. Umgekehrt führt auch das Eingangssignal, das zu einer Signalkomponente im Gesamtteilband 14 führt, zu einer Übersprechkomponente im Teilband 9.

Für das gewählte Beispiel einer Polyphasen-Filterbank mit nachgeschalteter TDAC-Filterbank ergibt einer Analyse der Phasenbeziehungen eine Phasendifferenz zwischen der Signal- und der Übersprechkomponente von 180° für $-N/2 \leqq m \leqq -1$ und von 0° für $0 \leqq m \leqq N/2 - 1$, wenn N ein ganzzahliges Vielfaches von 4 ist. Ist N ein ungeradzahliges Vielfaches von 2, so beträgt die Phasendifferenz 0° für $-N/2 \leqq m \leqq -1$ und 180° für $0 \leqq m \leqq N/2 -1$.

Diese Phasendifferenzen ermöglichen die Reduktion der Übersprechkomponenten durch gewichtete Summen bzw. Differenzbildung der Teilbandsignale $x_i$ und $x_j$.

Die Figur 4.a. zeigt schematisch die Operation der gewichteten Summenbildung mit den Gewichtsfaktoren $c_m$ und den daraus abgeleiteten Faktoren $d_m$.

In Figur 4. b. ist die zu der gewichteten Summenbildung inverse Operation schematisch dargestellt.

Wegen der gleichförmigen Struktur der Polyphasen-Filter ist die Zahl der zu bestimmenden Gewichtsfaktoren N/2. Die Gewichtsfaktoren werden so optimiert, daß durch die Wahl jeweils eines optimalen Gewichtsfaktors für jedes Teilband die Übersprechkomponenten möglichst stark reduziert werden.

Die Figur 5. zeigt den Ausschnitt aus den Frequenzgängen der Teilbandfilter 9 und 14. Im Vergleich zu Figur 3. zeigt sich eine deutliche Verbesserung des Sperrverhaltens. Für dieses Beispiel sind nachfolgend die optimierten Gewichtsfaktoren $c_m$ angegeben:

| m | $c_m$ |
|---|---|
| –6 | 0.0000 |
| –5 | 0.0145 |
| –4 | 0.0600 |
| –3 | 0.1700 |
| –2 | 0.3900 |
| –1 | 0.4500 |

Die optimierten Gewichtsfaktoren für die Kombination der gleichen Polyphasen-Filterbank mit einer TDAC-Filterbank, welche die 32 Teilbänder in jeweils weitere 18 Bänder unterteilt, lauten:

| m | $c_m$ |
|---|---|
| –9 | 0.0000 |
| –8 | –0.0037 |
| –7 | –0.0142 |
| –6 | –0.0410 |
| –5 | –0.0950 |
| –4 | –0.1850 |
| –3 | –0.3300 |
| –2 | –0.5350 |
| –1 | –0.6000 |

Die Ausgangssignale der mit Hilfe des erfindungsgemäßen Verfahrens modifizierten Filterbank entsprechen Teilbandsignalen einer Gesamtfilterbank mit verbesserten Frequenzgängen, da die Sperrbereichsdämpfungen der resultierenden Teilbandfilter durch geeignete Wahl der Gewichtsfaktoren optimiert sind.

**Patentansprüche**

1. Verfahren zur Reduzierung des Frequenzübersprechens bei der Übertragung und/oder Speicherung digitalisierter akustischer oder optischer Signale, bei welcher die Signale in Frequenzbänder aufgeteilt, codiert, übertragen und/oder gespeichert, decodiert und die Signale aus den Teilbändern wieder zu einem Signal zusammengefaßt werden und die Aufteilung des Signalspektrums in Teilbänder in hintereinandergeschalteten Stufen erfolgt, dadurch gekennzeichnet, daß korrespondierende Teilbandsignale ($x_i$, $x_j$) aus ersten Teilbändern (i), in welchen Spektralkomponenten bestimmter Frequenzen als Signalkomponenten auftreten, und Signale aus zweiten Teilbändern (j), in welchen diese Spektralkomponenten als Übersprechkomponenten im Sperrbereich auftreten, vor der Codierung einer gewichteten Summenbildung unterzogen werden, und daß die Teilbandsignale nach der Decodierung einer zur gewichteten Summenbildung inversen Operation unterzogen werden.

2. Verfahren nach Anspruch 1, dadurch gekennzeichnet, daß bei Verwendung einer vorausgehenden Filter- bzw. Transformationsstufe, die das Eingangssignal in eine gerade Anzahl M von Teilbändern aufteilt und zu einer Spiegelung der Spektralanteile in den Teilbändern führt, die Ausgangssignale jedes zweiten Teilbandes dieser Stufe vor dem Eingang in eine nachfolgende Stufe einer Korrekturoperation, welche eine Spiegelung der Spektralanteile in den Teilbändern rückgängig macht, unterzogen werden.

3. Verfahren nach Anspruch 2, dadurch gekennzeichnet, daß die Korrekturoperation dadurch erfolgt, daß bei den Ausgangssignalen der ungeradzahligen Teilbänder jeder zweite Wert mit -1 multipliziert wird und die Ausgangssignale der geradzahligen Teilbänder unverändert bleiben.

4. Verfahren nach einem der Ansprüche 1 bis 3, dadurch gekennzeichnet, daß die gewichteten Signale $y_i$ in dem Teilband i nach folgender Vorschrift gewonnen werden:

$$
\begin{aligned}
y_i &= d_m \cdot \left( x_i + c_m \cdot x_j \right) \\
y_j &= d_m \cdot \left( x_j - c_m \cdot x_i \right)
\end{aligned}
\quad \text{mit} \quad
\begin{aligned}
d_m &= \frac{1}{\sqrt{1 + c_m^2}} \\
-\frac{N}{2} &\le m \le -1
\end{aligned}
\quad,\quad
\begin{aligned}
i &= N \cdot k + m \\
j &= N \cdot k - 1 - m
\end{aligned}
$$

wobei $x_i$ das Teilbandsignal des Teilbandes i ist und $c_m$ Gewichtsfaktoren darstellen und die Faktoren $d_m$ durch die angegebene Vorschrift aus den Gewichtsfaktoren $c_m$ bestimmt werden.

5. Verfahren nach einem der Ansprüche 1 bis 4, dadurch gekennzeichnet, daß die zur gewichteten Summenbildung inverse Operation nach folgender Vorschrift durchgeführt wird:

$$x_i' = d_m \cdot (y_i' - c_m \cdot y_j')$$
$$x_j' = d_m \cdot (y_j' + c_m \cdot y_i')$$

wobei $x_i'$ das Teilbandsignal des Teilbandes i nach Durchführung der inversen Operation und $y_i'$ das gewichtete Teilbandsignal des Teilbandes i nach der Codierung und Decodierung ist.

6. Verfahren nach Anspruch 4 oder 5, dadurch gekennzeichnet, daß die Gewichtsfaktoren $c_m$ für die Summenbildung bezüglich des Frequenzganges der hintereinandergeschalteten Stufen optimiert werden.

7. Verfahren nach einem der Ansprüche 4 bis 6, dadurch gekennzeichnet, daß die Zahl der für die Summenbildung heranzuziehenden Gewichtsfaktoren $c_m$ halb so groß ist, wie die Zahl der von einer nachgeschalteten Stufe erzeugten Teilbänder.

**Claims**

1. A method of reducing frequency crosstalk during the transmission and/or storage of digitized, acoustic or optical signals, in which the signals are subdivided into frequency bands, encoded, transmitted and/or stored, and decoded and the signals from the partial bands are again combined to form a signal and the subdivision of the signal spectrum into partial bands takes place in series-connected stages, characterized in that corresponding partial band signals ($x_i$, $x_j$) from first partial bands (i), in which spectral components of specific frequencies occur as signal components and signals from second partial bands (j), in which these spectral components occur as crosstalk components in the stop range, undergo a weighted summation prior to encoding and in that the partial band signals undergo an operation inverse to the weighted summation following decoding.

2. A method according to claim 1, characterized in that, when using a preceding filter or transformation stage which subdivides the input signal into an even number M of partial bands and leads to reflection of the spectral components into the partial bands, the output signals of every other partial band of this stage undergo a correction operation before entering a following stage which cancels out a reflection of the spectral components into the partial bands.

3. A method according to claim 2, characterized in that the correction operation takes place in that in the case of the output signals of the odd partial bands every second value is multiplied by -1 and the output signals of the even partial bands remain unchanged.

4. A method according to any of claims 1 to 3, characterized in that the weighted signals $y_i$ in the partial band i are obtained in accordance with the following:

$$y_i = d_m \cdot \left( x_i + c_m \cdot x_j \right)$$
$$y_j = d_m \cdot \left( x_j - c_m \cdot x_i \right)$$
$$\text{with} \quad d_m = \frac{1}{\sqrt{1 + c_m^2}} \quad , \quad \begin{aligned} i &= N \cdot k + m \\ j &= N \cdot k - 1 - m \end{aligned}$$
$$-\frac{N}{2} \leq m \leq -1$$

in which $x_i$ is the partial band signal of the partial band i and the $c_m$ represent weight factors and the factors $d_m$ are determined from the weight factors $c_m$ by the above equation.

5. A method according to any of claims 1 to 4, characterized in that the operation inverse to the weighted summation is performed according to the following equations:
$$x_i' = d_m \cdot (y_i' - c_m \cdot y_j')$$
$$x_j' = d_m \cdot (y_j' + c_m \cdot y_i')$$
in which $x_i'$ is the partial band signal of the partial band i after performing the inverse operation and $y_i'$ is the weighted partial band signal of the partial band i following encoding and decoding.

6. A method according to claim 4 or 5, characterized in that the weight factors $c_m$ for summation are optimized with respect to the frequency response of the series-- connected stages.

7. A method according to any of claims 4 to 6, characterized in that the number of weight factors $c_m$ to be used for summation is half as large as the number of partial bands produced by a following stage.

## Revendications

1. Procédé pour la réduction de la diaphonie de fréquences lors de la transmission et/ou de la mémorisation de signaux numériques acoustiques ou optiques, selon lequel les signaux sont partagés en bandes de fréquences, codés, transmis et/ou mémorisés, décodés et selon lequel les signaux sont de nouveau regroupés, à partir des bandes partielles, en un signal, et selon lequel le partage du spectre du signal en bandes partielles s'effectue dans des étages branchés les uns derrière les autres, caractérisé en ce que des signaux correspondants de bande partielle ($x_i$, $x_j$) provenant de premières bandes partielles (i), dans lesquelles des composantes spectrales de fréquences déterminées apparaissent en tant que composantes de signal, et des signaux provenant de deuxièmes bandes partielles (j), dans lesquelles ces composantes spectrales apparaissent en tant que diaphonie de fréquences dans la bande éliminée, sont soumis avant le codage à une sommation pondérée, et en ce que les signaux de bande partielle sont soumis après le décodage à une opération inverse de la sommation pondérée.

2. Procédé selon la revendication 1, caractérisé en ce que, lorsque l'on utilise un étage précédent de filtrage ou de transformation, qui partage le signal d'entrée en un nombre pair M de bandes partielles et qui conduit à une symétrie de la composante spectrale dans les bandes partielles, les signaux de sortie de chaque deuxième bande partielle de cet étage sont soumis, avant l'entrée dans un étage suivant, à une opération de correction qui annule une symétrie de la composante spectrale dans les bandes partielles.

3. Procédé selon la revendication 2, caractérisé en ce que l'opération de correction est réalisée par le fait que, pour les signaux de sortie des bandes partielles impaires, chaque deuxième valeur est multipliée par -1 et les signaux de sortie des bandes partielles paires restent inchangés.

4. Procédé selon l'une des revendications 1 à 3, caractérisé en ce que les signaux pondérés $y_i$ dans la bande partielle i sont obtenus d'après la règle suivante :

$$y_i = d_m \cdot (x_i + c_m \cdot x_j) \qquad d_m = \frac{1}{\sqrt{1 + c_m^2}} \qquad i = N \cdot k + m$$

avec ,

$$y_j = d_m \cdot (x_j - c_m \cdot x_i) \qquad -\frac{N}{2} \leq m \leq -1 \qquad j = N \cdot k - 1 - m$$

$x_i$ étant le signal de la bande partielle i et $c_m$ représentant les facteurs de pondération et les facteurs $d_m$ étant déterminés par la règle donnée à partir des facteurs de pondération $c_m$.

5. Procédé selon l'une des revendications 1 à 4, caractérisé en ce que l'opération inverse de la sommation pondérée est réalisée selon la règle suivante :

$$x_i' = d_m \cdot (y_i' - c_m \cdot y_j')$$
$$x_j' = d_m \cdot (y_j' + c_m \cdot y_i')$$

$x_i'$ étant le signal de la bande partielle i après exécution de l'opération inverse et $y_i'$ étant le signal pondéré de la bande partielle i après le codage et le décodage.

6. Procédé selon les revendications 4 ou 5, caractérisé en ce que les facteurs de pondération $c_m$ pour la sommation sont optimisés en fonction de la réponse fréquentielle des étages branchés les uns derrière les autres.

7. Procédé selon l'une des revendications 4 à 6, caractérisé en ce que le nombre des facteurs de pondération $c_m$ devant être utilisés pour la sommation est égal à la moitié du nombre des bandes partielles produites par un étage branché en aval.

Fig. 1

Fig. 2

Fig. 3

Fig. 4

Fig. 5